# EUROPÄISCHE PATENTANMELDUNG

(11) **EP 1 279 956 A2**
(43) Veröffentlichungstag der Anmeldung: **29.01.2003**
(21) Anmeldenummer: 02014928.2
(22) Anmeldetag: 08.07.2002
(51) Int. Cl.: G01N 31/22

(54) **Bestimmung von Epoxiden und Aldehyden in Gasen**

(30) Priorität: 19.07.2001 DE 10134431
(71) Anmelder: BAYER AG, 51368 Leverkusen (DE)
(72) Erfinder: Boll, Matthias, Dr., 51061 Köln (DE)

(57) **Zusammenfassung**

Die vorliegende Erfindung betrifft eine einfache optische Erfassung der Epoxidund/oder Aldehydkonzentration in den Abgasen chemischer Reaktionen, insbesondere von Propenoxid und/oder Acrolein, zum Beispiel in der katalysierten partiellen Oxidation von Propen. Die Konzentration des Epoxids/Aldehyds kann nach einem Entwicklungsvorgang visuell quantitativ abgeschätzt werden oder durch eine Digitalisierung des erhaltenen Bildes auf der Detektionsplatte ausgewertet werden.

## Beschreibung

Die vorliegende Erfindung betrifft eine einfache optische Erfassung der Epoxidund/oder Aldehydkonzentration in den Abgasen chemischer Reaktionen, insbesondere von Propenoxid und/oder Acrolein, zum Beispiel in der katalysierten partiellen Oxidation von Propen. Die Konzentration des Epoxids/Aldehyds kann nach einem Entwicklungsvorgang visuell quantitativ abgeschätzt werden oder durch eine Digitalisierung des erhaltenen Bildes auf der Detektionsplatte ausgewertet werden.

Das wirtschaftliche Interesse an der Herstellung von Propylenoxid und Acrolein ist sehr groß, weil es sich um Ausgangsprodukte für eine Vielzahl weiterer wichtiger Produkte handelt. Viele der zur Herstellung dieser beiden Ausgangsverbindungen gewünschten Katalysatoren und/oder Verfahren (wie zum Beispiel die partielle Direktoxidation von Propen) müssen bei hohen Temperaturen betrieben beziehungsweise durchgeführt werden, so dass die Detektion der gebildeten und gewünschten Produkte vor allem im Versuchsmaßstab nur durch aufwendige gaschromatographische oder vergleichbare Methoden durchgeführt werden kann. Die bisher verwendeten optischen Detektionssysteme (im wesentlichen verwendet für Ethylenoxid) sind unter den oben beschriebenen Reaktionsbedingungen nicht anzuwenden, weil sie weder ausreichend temperaturstabil noch ausreichend oxidationsunempfindlich sind. Durch diese Einschränkung in der Detektionsmethode wird die Anzahl der im Labormaßstab untersuchbaren Katalysatoren beziehungsweise Verfahrensparameter so stark limitiert, dass die Wahrscheinlichkeit, ein günstiges Verfahren zu entwickeln, gering ist.

Zur Erfassung von Propylenoxid und Acrolein in heißen und oxidativen Abgasen chemischer Reaktoren wurden bisher in der Literatur keine Nachweisverfahren beschrieben, die auf einfache Art und Weise auszuwerten waren.

Die bisher angewandten Systeme benutzen organische Reagenzien, die entweder zu einem Farbumschlag der Systeme oder zu einer Änderung des Fluoreszenzverhaltens führen.
Bekannte Detektionssysteme basieren auf organischen Verbindungen wie dem 4-(pnitrobenzyl)-Pyridin, das mit Ethylenoxid von farblos nach Blau umschlägt (Anal. Chem. 27, 1435 (1955) und 33, 906 (1961) und J. Pharm. Sci., Band 55, Seiten 57 ff. (1961)) und diese Reaktion auch mit Propylenoxid zeigt. Diese Farbreaktion wird zum Beispiel im US-A-4 436 819 zur Detektion von Ethylenoxid in einer Detektionskasette verwendet. Für Acrolein existieren ebenfalls verschiedene organische Nachweissysteme, zum Beispiel Resorcin oder Hexylresorcin (Z. Lebensm. -Untersuch. u. -Forsch., 99, 352-61 (1954).) Andere organische Reagenzsysteme, die auf einem Farbumschlag der Detektionsschicht bei Kontakt mit Ethylenoxid basieren, sind zum Beispiel in den US-Patenten US-A-2 998 306, US-A-3 000 706, US-A-3 258 312, US-A-3 627 469, US-A-3 667 917 und US-A-4 015 937 beschrieben.

Anorganische Detektionssysteme werden nicht beschrieben. Auch werden keine Nachweissysteme beschrieben, bei denen zu erwarten ist, dass sie bei höheren Temperaturen (also um die 200 Grad und höher) noch ausreichend funktionieren. Ebenfalls noch nicht beschrieben sind Nachweissysteme, die einen ortsaufgelösten, quantitativen Nachweis von Propylenoxid und/oder Acrolein ermöglichen.

Aufgabe der vorliegenden Erfindung war ein Verfahren zur Detektion von Propenoxid/Acrolein bereitzustellen, welche einerseits einfach optisch erfasst werden kann und bei hohen Temperaturen einsetzbar ist, andererseits eine ortsaufgelöste Detektion ermöglicht ohne das es zu Querempfindlichkeiten mit gleichfalls im Abgas möglicherweise vorhandenen C2/C3-Säuren oder Neutralstoffen kommt.

Diese Aufgabe wird gelöst durch ein Verfahren zur Detektion von epoxidierten Kohlenwasserstoffen und/oder Aldehyden, dadurch gekennzeichnet, dass man eine als Detektionsmedium ein saures Salz einsetzt, welches auf einen Untergrund aufgebracht ist und gegebenfalls anschliessend das Detektionsmedium in einem weiteren Schritt bei Temperaturen oberhalb von 70°C thermisch behandelt.

Als epoxidierte Kohlenwasserstoffe eignen sich prinzipiell alle dem Fachmann bekannten Epoxide, wie Ethenoxid, Propenoxid, Butenoxid, Pentenoxid und deren höheren Homologen. Hierbei werden Ethenoxid, Propenoxid und Butenoxid bevorzugt.

Als Aldehyde eignen sich ebenfalls prinzipiell alle dem Fachmann bekannten Aldehyde, insbesondere jedoch ungesättigte Aldeyde, wie Acrolein.

Bevorzugt wird das Verfahren zur Detektion von epoxidierten Kohlenwasserstoffen und/oder Aldehyden in Gasen, besonders bevorzugt in heißen und oxidativen Abgasen chemischer Reaktoren eingesetzt, wo häufig neben den zu delektierenden Stoffen eine Vielzahl unterschiedlicher chemischer Verbindungen, insbesondere organische Säuren und organische Neutralstoffe vorkommen.

Unter dem Begriff saures Salz werden in der Regel anorganische Salze verstanden, die in ihrer Struktur saure Protonen enthalten. Insbesondere werden genannt saure Salze der Metalle der Gruppen 1-14 des Periodensystems der Elemente nach IUPAC 1985 genannt, wie Lithium-, Natrium-, Kalium-, Magnesium-, Calcium-, Eisen- und Bleisalze. Als Anionen eigenen sich insbesondere Hydrogensulfate, Hydrogensulfite und Dihydrogenphosphate.

Besonders bevorzugt sind Lithium-, Natrium-, Kalium-, Magnesium- und Calciumhydrogensulfate.

Als Untergrund eignen sich insbesondere poröse, temperaturstabile Materialien, wie Platten, Kugeln, Ringe, Zeolithe oder sonstige Formkörper, gesinterte Materialien, wie Fritten, insbesondere Glasfritten, aber auch gebrannte Tone, Silica, und Formkörper aus metallischen Oxiden oder Gemische derselben.

Weiterhin eignen sich beschichtbare, vorzugsweise hitzestabile, Gewebe, beispielsweise aus Asbest, Bentonit, Metall, Polymer oder anderen Fasern, welche mit dem Detektionsmaterial beschichtet werden.

Weiterhin eignen sich auch beschichtbare Materialien, beispielsweise Platten, Kugeln, Ringe, Rohre oder sonstige Formkörper, beispielsweise aus Glas, Polymer oder Metall, welche mit dem Detektionsmaterial beschichtet werden.

Zusätzlich eignen sich weiterhin insbesondere im Hochgeschwindigkeits-Screening eingesetzte Materialien, wie Tüpfelplatten, Racks, Siliziumplatten/-Wafer und Mikrotiterplatten.

Werden poröse oder saugfähige Materialien eingesetzt, so werden diese vorteilhaft mit einer, vorzugsweise wässrigen, Lösung des sauren Salzes getränkt und anschliessend teilweise oder vollständig getrocknet.

Vorzugsweise wird zur Tränkung eine wässrige Lösung mit im Bereich von 1 bis 30 Gewichtsprozent Salz eingesetzt. Um die Tränkung der Platten möglichst gleichmäßig realisieren zu können, ist es vorteilhaft, die Tränkung im Ultraschallbad durchzuführen. Der Tränkungsvorgang erfolgt in der Regel in einer Zeitspanne von wenigen Sekunden bis mehreren Tagen, bevorzugt innerhalb von Minuten. Die getränkte Platte wird vorteilhaft vor der Detektion auf die Abgastemperatur erwärmt.

Wird die Detektion bei niedrigen Temperaturen unterhalb von 50°C durchgeführt, so muss die Detektionsschicht in der Regel anschliessend thermisch entwickelt werden. Dies bedeutet, dass die Detektionsschicht erhitzt wird und für eine Zeitspanne im Bereich von wenigen Sekunden bis mehreren Tagen, insbesondere im Bereich von Minuten bei einer erhöhten Temperatur über 50°C gehalten wird. In der Regel erfolgt die thermische Behandlung bei Temperaturen im Bereich von 70 - 500°C, besonders vorteilhaft im Bereich von 80 bis 200°C. Die optimale Temperatur und Zeitspanne lassen sich durch wenige Vorversuche ermitteln und massschneidern.

Häufig lässt sich durch Temperatur und Zeitspanne der Entwicklung auch die Selektivität beeinflussen. So ist es beispielsweise einfach möglich, zwischen Propenoxid und Acrolein zu unterscheiden.

Mit Acrolein in Kontakt gebrachte Lithiumhydrogensulfat-Detektionsschichten werden vorteilhaft im Bereich von 50 bis 80°C bei im Bereich von 1 bis 5 Minuten entwickelt. Hierbei färbt sich die farblose Detektionsschicht an den Stellen, die mit Acrolein in Kontakt kamen, dunkel bis schwarz.

Mit Propenoxid in Kontakt gebrachte Lithiumhydrogensulfat-Detektionsschichten werden vorteilhaft im Bereich von 100 bis 180°C im Bereich von 5 bis 20 Minuten entwickelt. Hierbei färbt sich die farblose Detektionsschicht an den Stellen, die mit Propenoxid in Kontakt kamen, dunkel bis schwarz.

Der Entwicklungsschritt kann in der Regel entfallen, wenn die Detektion/Exposition der Detektionsschicht bereits bei einer entsprechenden erhöhten Temperatur stattgefunden hat.

Ein signifikanter Vorteil des erfindungsgemässen Verfahrens ist, dass das Verfahren auch bei Temperaturen oberhalb von 200°C einsetzbar ist.

Da der Grad der Verfärbung häufig proportional der Epoxid- und/oder Aldehydkonzentration ist, lassen sich oberhalb von 180°C stattfindende Oxidationsprozesse online und vor allem häufig bis zu einer gewissen Granze auch quantitativ verfolgen, da sich in der Regel die Verfärbung der Detektionsschicht mit zunehmender Exposition verstärkt. Propylenoxid und Acrolein können beispielsweise in der Regel quantitativ bis zu einer Konzentration von mindestens 30 ppm über zwei Stunden erfaßt werden, ohne das es zu Querempfindlichkeiten mit gleichfalls im Abgas möglicherweise vorhandenen C2/C3-Säuren oder Neutralstoffen kommt. Das Verfahren läßt zugleich eine Ortsauflösung der Exposition zu.

Das Verfahren lässt sich vorteilhaft kombinieren mit einer automatisierten optischen Auswertung mit Hilfe eines optischen Detektors, Digitalisierung des Bildes und computerisierten Auswertung des detektierten Bildes, wie beispielsweise beschrieben in US-A-6 157 449, WO-00/14529-A1 oder WO-98/15805-A1, welche gleichzeitig für die Zwecke der US-Patentpraxis als Referenz in die vorliegende Anmeldung aufgenommen werden.

Weiterhin vorteilhaft lässt sich das Verfahren in Kombination mit einer Anordnung von kleinen Reaktoren (beispielsweise einer Mikrotiterplatte) verwenden, wobei das in den Mikroreaktoren mit verschiedensten Katalysatoren in Kontakt gebrachte Reaktionsgas mit dem erfindungsgemässen Verfahren auf Epoxide und/oder Aldehyde geprüft wird.
Hierzu wird die Anordnung von kleinen Reaktoren in engem räumlichen Kontakt mit der Detektionsschicht betrieben.

### Beispiele

### Beispiel 1

### Unterscheidung von flüssigem Propenoxid und/oder Acrolein von anderen flüssigen C2- und C3-Molekülen

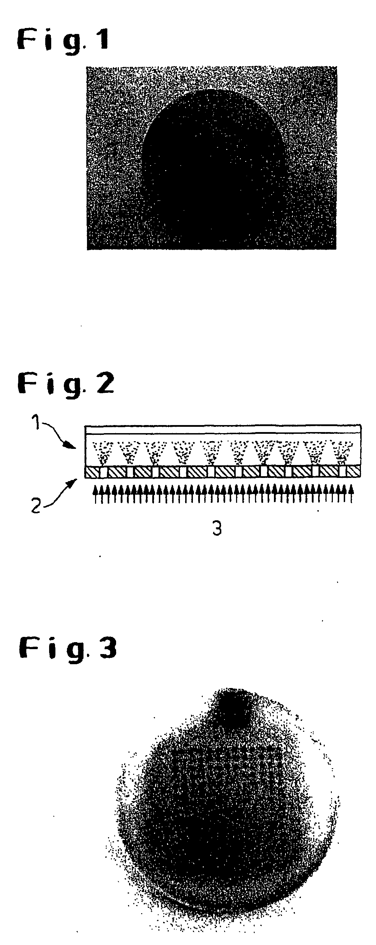

Auf einer Detektionsplatte, die durch Tränkung von einer Glasfritte der Porosität D4 des Durchmessers 40 mm in 100 ml einer 10 gew.-%igen LiHSO₄-Lösung und anschliessenden Trocknung bei 100°C für 1 h hergestellt wurde, wurden 10 µl von Propenoxid, Acrolein und einem Gemisch von Acetaldehyd, Propionaldehyd, 2-Propanol, Aceton, Allylalkohol, Propionsäure, 1-Propanol und 1,2-Propandiol aufgebracht und an Luft bei Raumtemperatur getrocknet. Die Detektionsplatte wurde daraufhin für 10 min auf 180 Grad erhitzt. Propenoxid und Acrolein hinterließen schwarze Flecken, die Nebenprodukte nicht (siehe Fig. 1- Links oben Acrolein, mitte unten Propenoxid und oben rechts Gemisch aus Nebenproduktkomponenten).

### Beispiel 2

### Detektion von gasförmigem Propenoxid (978 ppm) in Stickstoff (etwa 98 %), Kohlenmonoxid (etwa 1 %) und Propen (etwa 1,01 %) bei Raumtemperatur

Durch ein Lochblech mit direkt dahinter liegender Detektionsplatte, die wie in Beispiel 1 angegeben präpariert wurde, wurde für 2 h ein Gasstrom der in der Überschrift angegebenen Zusammensetzung durchgeleitet (schematischer Aufbau siehe Fig. 2 - (1)=Detektionsschicht aus Glasfritte getränkt mit LiHSO₄, (2)=Lochblech, (3)=Propenoxidhaltiges Gas). Die Zusammensetzung wurde GC-chromatigraphisch bestätigt. Durch die runde Detektionsschicht, die einen Durchmesser von 40 mm besaß, wurde das Gasgemisch mit einem Massendurchfluß von 40 ml pro Minute bei Raumtemperatur durchgeleitet. Die "Entwicklung" erfolgte dann bei 180 Grad über 10 Minuten an Luft. Das Ergebnis ist in Fig. 3 (Ergebnis eines Versuchs zur flächenaufgelösten Detektion von Propenoxid (1000 ppm)) dargestellt. Der schwarze Punkt im oberen Bereich ist eine zusätzliche Markierung, welche nach dem Versuch hinzugefügt wurde.

### Beispiel 3

### Detektion von gasförmigem Propenoxid (33 ppm) in Stickstoff (25%) und Propen (etwa 75%) bei Raumtemperatur

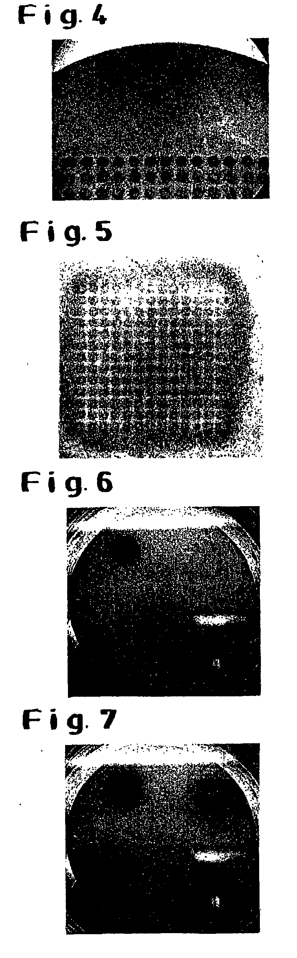

Durch ein Lochblech mit direkt dahinter liegender Detektionsplatte, die wie in Beispiel 1 angegeben präpariert wurde, wurde für 6 h ein Gasstrom der in der Überschrift angegebenen Zusammensetzung durchgeleitet (schematischer Aufbau siehe Bild 2). Durch die runde Detektionsschicht, die einen Durchmesser von 40 mm besaß, wurde das Gasgemisch mit einem Massendurchfluß von 40 ml pro Minute bei Raumtemperatur durchgeleitet. Die "Entwicklung" erfolgte dann bei 180 Grad über 10 Minuten an Luft. Das Ergebnis ist in Fig. 4 (Ausschnitt aus einer Detektionsschicht, die mit einem Eichgas mit 33 ppm Propenoxid bei Raumtemperatur behandelt wurde. Der schwarze Fleck im oberen Bildabschnitt ist ein Kontrollfleck.) dargestellt.

### Beispiel 4

### Detektion von gasförmigem Propenoxid (978 ppm) in Stickstoff (etwa 98 %), Kohlenmonoxid (etwa 1 %) und Propen (etwa 1,01 %) bei 200 Grad

Durch ein Lochblech mit direkt dahinter liegender Detektionsplatte, die wie in Beispiel 1 angegeben präpariert wurde, wurde für 2 h ein Gasstrom der in der Überschrift angegebenen Zusammensetzung bei 200 Grad Detektionsschichttemperatur durchgeleitet (schematischer Aufbau siehe Bild 2). Durch die runde Detektionsschicht, die einen Durchmesser von 40 mm besaß, wurde das Gasgemisch mit einem Massendurchfluß von 40,1 ml pro Minute durchgeleitet. Die "Entwicklung" erfolgte dann bei 180 Grad über 10 Minuten an Luft. Ein Ausschnitt der Detektionsschicht nach der Entwicklung ist in Fig. 5 (Ausschnitt aus einer Detektionsschicht, die mit einem Eichgas mit 978 ppm Propenoxid bei 200 Grad Celsius behandelt wurde dargestellt.)

### Beispiel 5

### Unterscheidung von Acrolein und Propenoxid bei Expositionstemperaturen unterhalb 40 Grad

Acrolein und Propenoxid werden flüssig auf die Detektionsplatte, die wie in Beispiel 1 angegeben präpariert wurde, aufgetropft. Die Detektionsschicht wird nach Trocknung an Luft langsam erwärmt, und bei etwa 80 Grad zeigen sich die mit Acrolein exponierten Stellen durch Schwarzfärbung an. Bei weiterer Temperatursteigerung färben sich auch die Stellen dunkel, die mit Propenoxid exponiert wurden. Fig. 6 (Ausschnitt aus einer Detektionsschicht, die mit Acrolein (links oben und rechts unten) und Propylenoxid (rechts oben und links unten) behandelt wurde) zeigt diese Detektionsschicht bei 80°C; Fig. 7 (Ausschnitt aus einer Detektionsschicht, die mit Acrolein (links oben und rechts unten) und Propylenoxid (rechts oben und links unten) behandelt wurde) bei 120°C.

## Patentansprüche

1. Verfahren zur Detektion von epoxidierten Kohlenwasserstoffen und/oder Aldehyden, **dadurch gekennzeichnet, dass** man als Detektionsmedium ein saures Salz einsetzt, welches auf einen Untergrund aufgebracht ist und gegebenfalls anschliessend das Detektionsmedium in einem weiteren Schritt bei Temperaturen oberhalb von 70°C thermisch behandelt.

2. Verfahren gemäss Anspruch 1, **dadurch gekennzeichnet, dass** der Untergrund aus einem porösen Material besteht.

3. Verfahren gemäss Anspruch 1 oder 2, **dadurch gekennzeichnet, dass** das Detektionsmedium ein Hydrogensulfat der Erdalkalimetallgruppe oder der Alkalimetallgruppe darstellt.

4. Verfahren gemäss einem der Ansprüche 1-3, **dadurch gekennzeichnet, dass** das Detektionsmedium anschliessend bei Temperaturen zwischen 70 und 500°C thermisch behandelt wird.

5. Verfahren gemäss einem der Ansprüche 1-4, **dadurch gekennzeichnet, dass** Acrolein und/oder Propenoxid detektiert werden.
